# EUROPÄISCHE PATENTSCHRIFT

(11) **EP 1 344 617 B1**
(45) Veröffentlichungstag und Bekanntmachung des Hinweises auf die Patenterteilung: **30.03.2005**
(21) Anmeldenummer: 03003521.6
(22) Anmeldetag: 15.02.2003
(51) Int. Cl.: B27C 5/06, B23Q 1/03, B23Q 3/06

(54) **Bearbeitungsmaschine zum konturenabhängigen Ausschneiden oder Fräsen**
Working machine for cutting and milling along a predefined path
Machine outil pour couper ou fraiser le long d'un contour prefixé

(30) Priorität: 12.03.2002 DE 20203938 U
(43) Veröffentlichungstag der Anmeldung: 17.09.2003
(73) Patentinhaber: Wassmer Spezialmaschinen GmbH, 79423 Heitersheim (DE)
(72) Erfinder: Wassmer, Paul, 79423 Heitersheim (DE)
(74) Vertreter: Maucher, Wolfgang, Dipl.-Ing.

(56) Entgegenhaltungen:
- DE-A- 2 726 382
- DE-A- 10 026 069
- US-A- 3 858 630
- US-A- 4 830 075

## Beschreibung

Die Erfindung betrifft eine Bearbeitungsmaschine zum wenigstens teilweisen Bearbeiten, konturenabhängigen Ausschneiden oder Fräsen eines einspannbaren Bauteils aus einem plattenförmigen Werkstück mit einer als Spanneinrichtung dienenden, zum Angreifen an der Rück- oder Unterseite des Werkstücks vorgesehenen Saugvorrichtung, die einzelne Sauger aufweist, welche insbesondere verstellbar an einem Maschinengestell der Maschine angeordnet sind, und mit einer zweiten spanneinrichtung.

Derartige Maschinen sind z.B. aus der US-A-38 58 630 bekannt. Das Einspannen des Werkstücks geschieht dabei mit einer Saugvorrichtung, die an der Rück- oder Unterseite des Werkstücks angreifen kann, was den Vorteil hat, dass diese Saugvorrichtung je nach Form des Werkstücks eingestellt oder verschoben werden kann. Darüber hinaus bleiben die Ränder des Werkstücks frei, so dass sie gut zugänglich sind und mit einem Werkzeug entsprechend gut erreicht und bearbeitet werden können. Selbst Profilierungen oder in die Schmalseite eines plattenförmigen Werkstücks einzubringende Ausnehmungen können bearbeitet werden.

In machen Fällen müssen aber Werkstücke aus einem Werkstoff bearbeitet werden, der luftdurchlässig ist. Außerdem können derartige Werkstücke, insbesondere wenn sie aus Holz bestehen, Verwerfungen haben und dann im Bereich einzelner Sauger der Saugvorrichtung nicht erfasst werden, so dass das Werkstück bei der Bearbeitung verschoben oder gar losgerissen werden kann. Neben dem dadurch entstehenden Ausschuss bedeutet dies auch eine Gefahr für den Benutzer.

Sollen - beispielsweise relativ dünne - Werkstücke gleicher Kontur hergestellt werden, können sie durch die Saugvorrichtung und deren einzelne Sauger verformt werden. Außerdem ist es zeitaufwändig, wenn mehrere gleiche Einzelstücke gleicher Kontur auf der selben Maschine nacheinander angefertigt werden müssen. i

Es besteht deshalb die Aufgabe, eine Maschine der eingangs genannten Art zu schaffen, bei welcher die Vorteile einer Befestigung des Werkstücks mittels eine Werkstückoberfläche völlig freilassenden Saugvorrichtungen erhalten bleibt, trotzdem aber auch Werkstücke bearbeitet werden können, die aus einem luftdurchlässigen Werkstoff bestehen und/oder Verwerfungen oder Verformungen oder dergleichen Unebenheiten haben.

Zur Lösung dieser scheinbar widersprüchlichen Aufgabe ist vorgesehen, dass die Maschine einen zum Beaufschlagen, der der Saugvorrichtung abgewandten Seite des Werkstücks dienenden Niederhalter als zweite Spanneinrichtung aufweist, dass der Niederhalter an seinem das Werkstück beaufschlagenden Berührbereich wenigstens eine oder zwei zueinander beabstandete Andrückrollen hat und unter Druck relativ zu dem Werkstück quer zur Achse der Andrückrolle verstellbar ist und dass der Niederhalter synchron mit einem zur Bearbeitung des Werkstücks dienenden Werkzeug verstellbar ist.

In überraschender Weise wird die erfindungsgemäße Bearbeitungsmaschine also mit zwei Spanneinrichtungen unterschiedlicher Art ausgerüstet, nämlich mit der schon erwähnten Saugvorrichtung und zusätzlich mit dem ebenfalls als Spanneinrichtung dienenden Niederhalter. Dadurch ist es möglich, auch solche Werkstücke einzuspannen, die nicht angesaugt werden können, weil sie zu viel Luft durchlassen oder Verwerfungen oder Unebenheiten haben, die nicht gleichmäßig an allen Saugköpfen oder Saugpunkten erfasst werden können. Außerdem ist es möglich, dass Werkstücke mit übereinstimmenden Konturen gleichzeitig als Stapel mit Hilfe des Niederhalters eingespannt und dann bearbeitet werden können. Gegebenenfalls kann dabei die Einspannung zusätzlich durch die Saugvorrichtung unterstützt werden, die zumindest das unterste Werkstück eines solchen Stapels zusätzlich erfasst.

Der Benutzer hat also die Möglichkeit, wahlweise und je nach Erfordernis der herzustellenden Randkontur und so weiter das Werkstück durch die Saugvorrichtung oder mit dem Niederhalter oder in Einzelfällen mit beiden Spanneinrichtungen festzulegen. Somit kann der scheinbare maschinelle Mehraufwand dadurch kompensiert werden, dass nicht eine weitere Bearbeitungsmaschine für solche Werkstücke erforderlich ist, die mit einer Saugvorrichtung nicht genügend festgespannt werden können.

Da der Niederhalter an seinem das Werkstück beaufschlagenden Berührbereich wenigstens eine oder zwei zueinander beabstandete Andrückrollen hat und unter Druck relativ zu dem Werkstück quer zur Achse der Andruckrollen verstellbar ist, indem diese dann auf der Werkzeugoberfläche abrollen können, kann der Niederhalter wahlweise dort an dem Werkstück zum Einsatz kommen, wo entsprechend große Kräfte, insbesondere von dem Werkzeug ausgehend, aufzunehmen sind. Dabei kann die durch diese Andrückrolle oder Andrückrollen gebildete Spannstelle aufgrund der synchronen Verstellbarkeit mit dem Werkzeug mit dem Bearbeitungsvorschub mitwandern und immer dort wirken, wo die Bearbeitungskräfte auftreten.

Eine besonders zweckmäßige Ausführungsform der Erfindung kann dabei darin bestehen, dass die wenigstens zwei Andrückrollen des Niederhalters parallel und mit Abstand zueinander angeordnet sind und mit einer Vorschubeinrichtung für das Werkzeug verbunden sind. Somit wird die synchrone Bewegung des Niederhalters und des Werkzeugs automatisch erreicht und kann mit einem einzigen Antrieb bewirkt werden.

Das Werkzeug, insbesondere ein Fräser, kann im Zwischenraum zwischen den beiden Andrückrollen angeordnet sein und die Vorschubeinrichtung zum Verstellen des Werkzeugs kann auch zum Verschieben der Andrückrollen des Niederhalters dienen. Damit ist die jeweilige Bearbeitungsstelle an dem Werkstück besonders sicher festgespannt, da die Niederhaltung beidseits des Werkzeugs unmittelbar diesem benachbart erfolgt. Diese Anordnung kann etwa der gemäß DE 27 26 382 C3 entsprechen und eine analoge Wirkungsweise haben.

Die Saugvorrichtung kann wenigstens eine, vorzugsweise mehrere Saugkonsolen aufweisen, an denen einzelne Saugköpfe lösbar und entfernbar sowie einstellbar angeordnet sind und es kann eine auswechselbare Auflageplatte als Abstützung für ein Werkstück vorgesehen sein, die auf die Saugkonsole passt und darauf als Unterlage für Werkstücke dient, die mit dem Niederhalter einspannbar sind. Der Benutzer kann also die Saugköpfe entfernen und eine stabile Unterlage mit Hilfe einer Auflageplatte für solche Werkstücke schaffen, die bei ihrer Bearbeitung mit großer Kraft an eine möglichst ebene Fläche angedrückt werden sollen. Es besteht aber auch die Möglichkeit, ein Werkstück unmittelbar auf die Saugköpfe aufzulegen und mit dem Niederhalter festzuhalten oder zusätzlich festzuhalten.

Eine Ausgestaltung der Erfindung von besonders vorteilhafter und deshalb eigener schutzwürdiger Bedeutung kann darin bestehen, dass an wenigstens einem Rand der Bearbeitungs- oder Auflagefläche für das Werkstück ein Anschlaglineal angeordnet ist, welches aus seiner Anschlagposition den Rand eines zuvor daran ausgerichteten Werkstücks freigebend wegbewegbar ist. Ein Benutzer kann also ein Werkstück, beispielsweise eine Holzplatte oder auch übereinanderliegende Holzplatten, mit Hilfe dieses Anschlaglineals ausrichten, wie er es vor allem bei der Holzbearbeitung auch in anderen Fällen häufig tut und gewöhnt ist, wonach dann das Werkstück eingespannt wird. Soll der Rand dieses Werkstücks bearbeitet werden, mit welchem das Werkstück an das Anschlaglineal angelegt wurde, kann auch dieser Rand nach dem Wegbewegen des Lineals ungehindert bearbeitet werden.

Besonders günstig ist es dabei, wenn das Anschlaglineal über die gesamte Abmessung einer Seite der Arbeitsfläche reicht und insbesondere an wenigstens einem Ende einen rechtwinklig zu seiner Orientierung vorstehenden Zusatzanschlag oder Reiter trägt, der gegebenenfalls in Längsrichtung des Anschlaglineals verstellbar und festlegbar ist. Somit können vor allem rechteckige Werkstücke gut ausgerichtet werden, weil sie nicht nur mit einem Rand, sondern auch einem dazu rechtwinkligen Rand an dem Anschlaglineal und einem Zusatzanschlag angelegt und dadurch ausgerichtet werden können.

Das Anschlaglineal kann an Schwenkarmen befestigt sein, die insbesondere etwa in einer parallel zur Arbeitsfläche liegenden oder mit der Arbeitsfläche übereinstimmenden Ebene verschwenkbar sind. Zwar könnte das Anschlaglineal auch aus seiner Gebrauchslage beispielweise hinter oder unter die Arbeitsfläche verschwenkt werden, jedoch ist dort häufig kein Platz, so dass eine etwa in der Ebene der Arbeitsfläche stattfindende Verschwenkung auch aus Platzgründen vorteilhaft ist. Gegebenenfalls kann eine solche Verschwenkung auch zur Verstellung der Lage des Anschlagelements ausgenutzt werden.

An dem Anschlagelement können Schwenkarme angreifen, die parallel zueinander angeordnet und synchron verschwenkbar sind und auf ihrer Schwenkachse können mit Abstand zu dem Anschlaglineal jeweils parallel zueinanderstehende, gegenüber den Schwenkarmen um einen Winkelbetrag versetzte Antriebsarme vorgesehen sein, an denen ein Drehantrieb, gegebenenfalls ein Lenker und ein Antrieb, angreift. Durch mehrere, bevorzugt zwei Schwenkarme kann ein relativ langes Lineal praktisch parallel zu sich selbst aus der Gebrauchs- in eine Ruhelage verschwenkt werden. Dabei können die Antriebsarme im Winkel zu dem jeweiligen Schwenkarm stehen, um eine möglichst günstige Anordnung relativ zu einem Antrieb zu haben.

Besonders günstig ist es auch für die Aufnahme von Anschlagkräften, wenn die Schwenkarme in Gebrauchsstellung des Anschlaglineals rechtwinklig zu diesem und die Betätigungsarme dem gegenüber um einen spitzen Winkel, zum Beispiel um etwa 45° versetzt angeordnet sind, so dass eine Verschwenkung der Antriebsarme um 90° die Schwenkarme und das Anschlaglineal in Überdeckung miteinander bringen. Dadurch hat die Anordnung einen relativ geringen Platzbedarf.

Nachstehend ist ein Ausführungsbeispiel der Erfindung anhand der Zeichnung näher beschrieben. Es zeigt in zum Teil schematisierter Darstellung:
- Fig. 1: Eine Seitenansicht einer erfindungsgemäßen Maschine, bei welcher ein Werkstück von den Saugern oder Saugköpfen einer Saugvorrichtung festgelegt ist,
- Fig. 2: eine der Fig. 1 entsprechende Darstellung der erfindungsgemäßen Maschine, bei welcher die Saugköpfe entfernt und eine Auflageplatte auf die Saugkonsolen aufgelegt ist, die das Werkstück trägt, welches von einem als zweite Spanneinrichtung vorgesehenen Niederhalter im Bereich des Werkzeugs festgespannt ist,
- Fig. 3: in vergrößertem Maßstab und teilweise im Querschnitt den erfindungsgemäßen Niederhalter mit zwei beidseits eines Werkzeugs angeordneten, zu dem Niederhalter gehörenden Druckrollen, die das Werkstück, im Ausführungsbeispiel einen Stapel von zwei Werkstücken, im Bereich des Werkzeugs festlegen, wobei der Niederhalter mit dem Werkzeug gemeinsam verfahrbar ist,
- Fig. 4: einen Querschnitt der Maschine im Bereich einer Saugkonsole gemäß der Schnittlinie D-D in Fig. 1 mit einer Saugkonsole, zwei an dieser angeordneten Saugern oder Saugköpfen und einem davon festgelegten Werkstück,
- Fig. 5: eine der Fig. 4 entsprechende Darstellung, das heißt einen Querschnitt der Maschine gemäß der Schnittlinie E-E in Fig. 2, wobei die Saugköpfe entfernt und durch eine Auflageplatte für das Werkstück ersetzt sind,
- Fig. 6: eine Seitenansicht eines an wenigstens einer Längs- oder Querseite der Werkstückauflage der Maschine an deren Maschinenständer angeordneten Anschlaglineals mit seinem Schwenkantrieb zur. Verschwenkung dieses Anschlaglineals in die Gebrauchslage oder in eine Ruhelage,
- Fig. 7: in vergrößertem Maßstab einen Querschnitt des Anschlaglineals und eines für seine Verschwenkung in eine Ruhelage dienenden Schwenklagers, wobei der dem Lineal zugewandte Randbereich einer Auflageplatte und eines darauf liegenden, an dem Anschlaglineal anliegenden Werkstücks im Schnitt angedeutet sind, sowie
- Fig. 8: einen Schnitt gemäß der Linie B-B in Fig. 6 mit Blick auf die Schwenkarme für das von ihnen getragene Lineal in Gebrauchsstellung.

Eine im Ganzen mit 1 bezeichnete Bearbeitungsmaschine, im Folgenden auch kurz "Maschine 1" genannt, dient zum wenigstens teilweisen konturenabhängigen Ausschneiden oder Fräsen eines Bauteils aus einem plattenförmigen Werkstück 2 etwa analog DE 27 26 382 C3.

Die Maschine 1 weist eine als Spanneinrichtung dienende, zum Angreifen an der Rück- oder Unterseite des Werkstücks 2 vorgesehene Saugvorrichtung mit Saugerkonsolen 3 auf, an denen einzelne Sauger oder Saugköpfe 4 angeordnet sind, wobei die Saugerkonsolen 3 und auch die Saugköpfe 4 verstellbar an einem Maschinengestell 5 angeordnet sind, um eine Anpassung an unterschiedlich bemessene Werkstücke 2 zu ermöglichen.

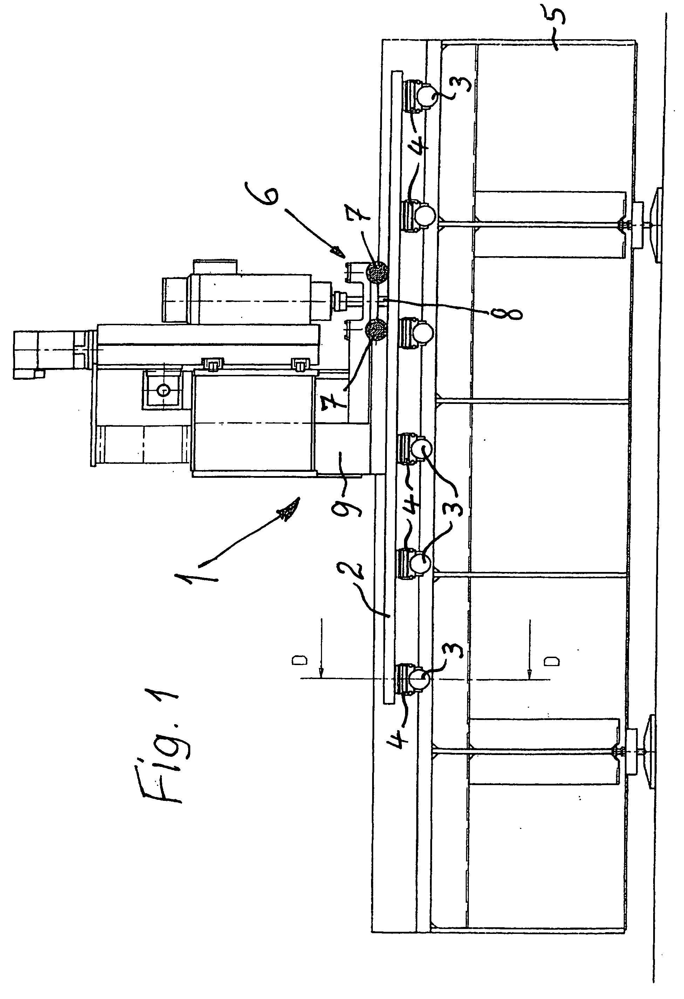

In den Fig. 1 bis 3 erkennt man, dass die Maschine 1 eine zweite Spanneinrichtung, nämlich einen Niederhalter 6 aufweist, der zum Beaufschlagen der der Saugvorrichtung 3,4 abgewandten Seite des Werkstücks 2 dient. Das Werkstück 2 kann also wahlweise mit Hilfe der Sauger 4 oder mit dem Niederhalter 6 oder gegebenenfalls gleichzeitig mit beidem festgelegt werden.

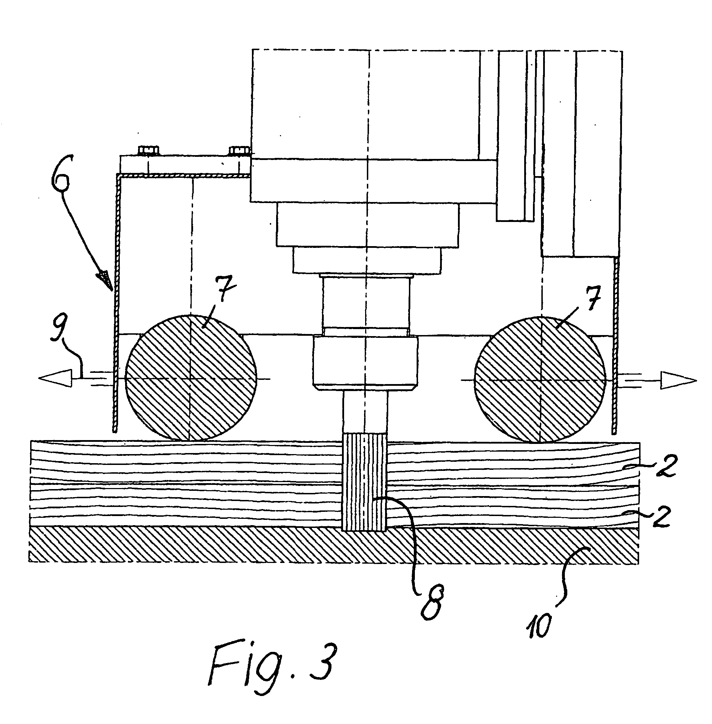

Dabei hat der Niederhalter 6 gemäß Fig. 1 bis 3 an seinem das Werkstück 2 beaufschlagenden Berührbereich im Ausführungsbeispiel zwei zueinander beabstandete parallele Andrückrollen 7, die auch unter Druck relativ zu dem Werkstück 2 quer zu ihrer Drehachse verstellbar sind. Der Niederhalter 6 ist synchron mit einem zur Bearbeitung des Werkstücks 2 dienenden Werkzeugs 8, gemäß Fig. 3 mit einem Fräser, verstellbar, wobei die beiden Andrückrollen 7 des Niederhalters 6 mit einer Vorschubeinrichtung 9 für das Werkzeug 8 verbunden sind, so dass die Einspannung des Werkstücks 2 immer im Bereich des Werkzeugs 8 erfolgen kann, auch wenn das Werkzeug 8 im Verlaufe der Bearbeitung seine Position verändert.

Die Länge der Andrückrollen 7 entspricht etwa der Breite des zu bearbeitenden Werkstücks 2 oder der Breite oder Länge der an der Maschine 1 vorgesehenen Auflagefläche für das Werkzeug 2, so dass eine sichere Einspannung des Werkstücks nicht nur mit der Saugvorrichtung, sondern auch mit dem Niederhalter 6 und seinen Andrückrollen 7 erfolgen kann, wobei das Werkzeug 8 auch zwischen den Andrückrollen 7 parallel zu diesen, also senkrecht zur Zeichenebene verstellbar ist.

Vor allem in Fig. 3 erkennt man, dass das Werkzeug 8 im Zwischenraum zwischen den beiden Andrückrollen 7 angeordnet ist, also die Bearbeitungsstelle jeweils bestmöglich eingespannt wird, wobei die Vorschubeinrichtung 9 zum Verstellen des Werkzeugs 8 auch zum Verschieben der Andrückrollen 7 des Niederhalters 6 dient.

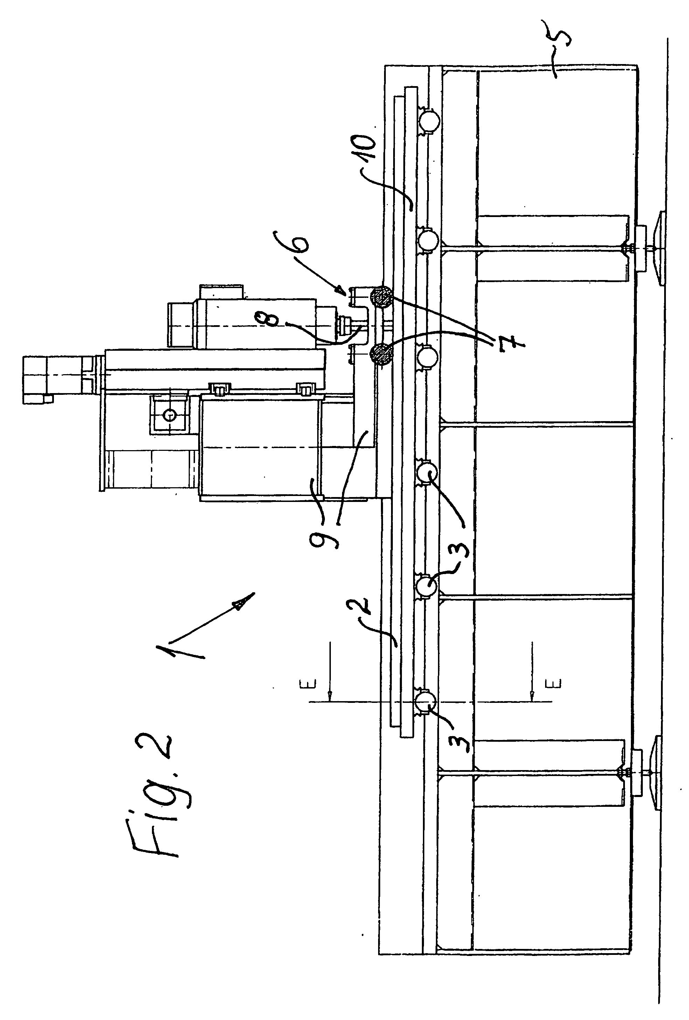

Die Saugvorrichtung weist die schon erwähnten Saugkonsolen 3 auf, die parallel zueinander angeordnet sind und an denen die einzelnen Saugköpfe 4 lösbar und entfernbar angeordnet sind, wie der Vergleich der Fig. 1 und 2 andeutet.

Dabei ist in Fig. 2 außerdem dargestellt, dass eine auswechselbare Auflageplatte 10 als Abstützung für das Werkstück 2 vorgesehen sein kann, die auf die Saugkonsolen 3 passt und darauf als Unterlage für Werkstücke 2 dienen kann, die mit dem Niederhalter 6 eingespannt werden. Diese Anordnung zeigt Fig. 2 und 3. Während der Bearbeitung ist in diesem Falle das Werkstück 2 nur durch den Niederhalter 6 und seine Andrückrollen 7 eingespannt. Dabei kann das als Fräse ausgebildete Werkzeug 8 gemäß Fig. 3 auch etwas in die Auflageplatte oder Arbeitsplatte 10 eingreifen, da diese in der Regel aus Holz oder holzartigem Werkstoff besteht und nach einer gewissen Verschleißzeit ausgetauscht werden kann.

Fig. 2 verdeutlicht dabei, dass das Einspannen mit Hilfe des Niederhalters 6 den Vorteil hat, dass auch mehrere aufeinander gestapelte Werkstücke 2, im Ausführungsbeispiel zwei derartige plattenförmige Werkstücke 2 gleichzeitig bearbeitet werden können.

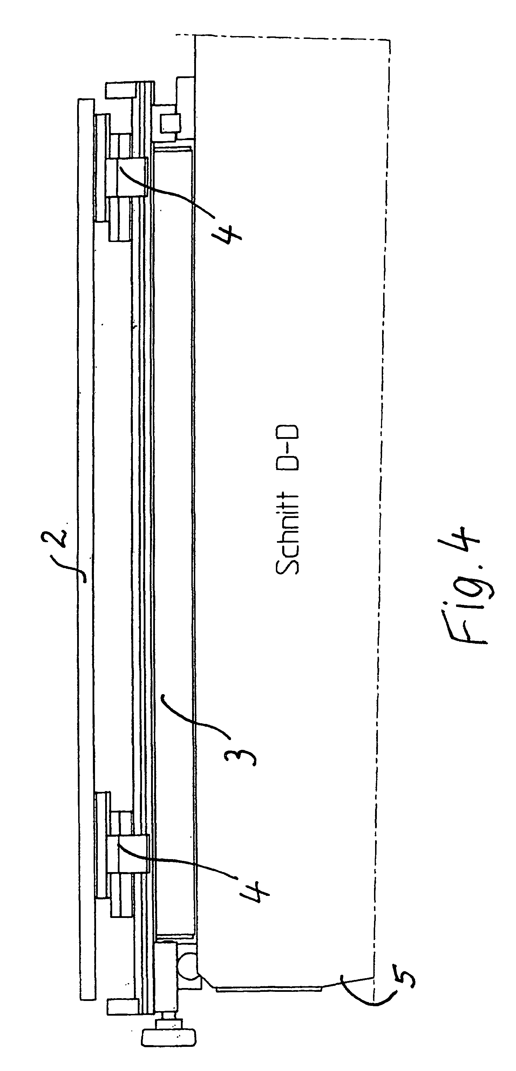

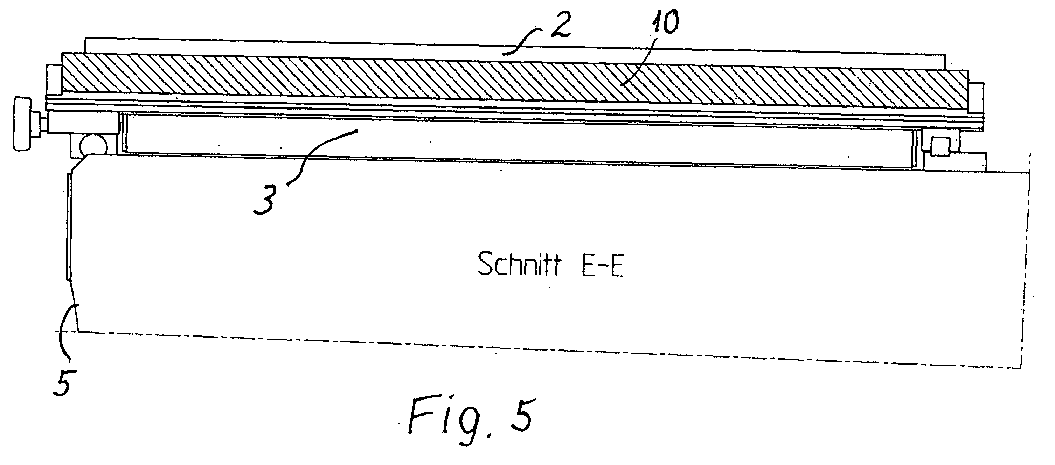

Die Festlegung eines Werkstücks 2 mit Hilfe der an den verschiebbaren Saugkonsolen 3 ebenfalls verstellbaren Saugköpfen 4 verdeutlicht Fig. 4, während in Fig. 5 die Auflage des Werkstücks 2 auf eine Arbeits- oder Auflageplatte 10 dargestellt ist, die auf die Saugkonsolen 3 aufgelegt ist, nachdem die Saugköpfe 4 entfernt wurden.

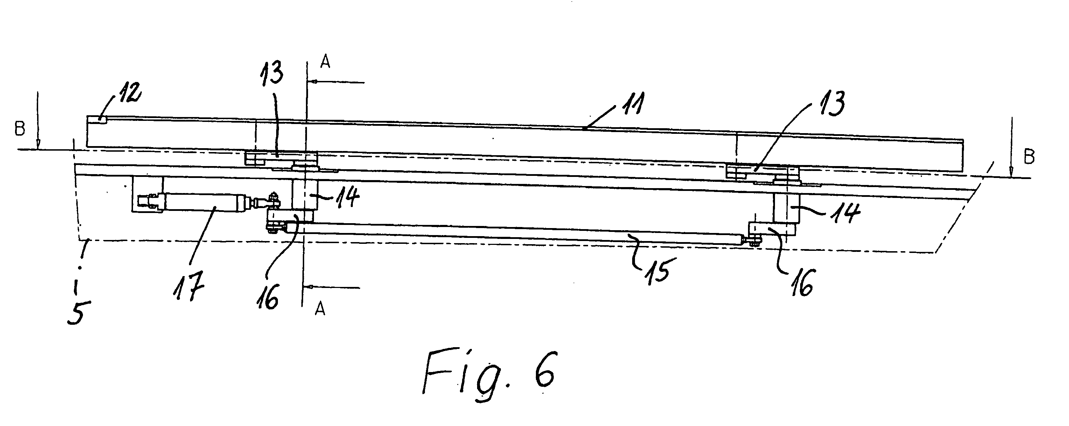

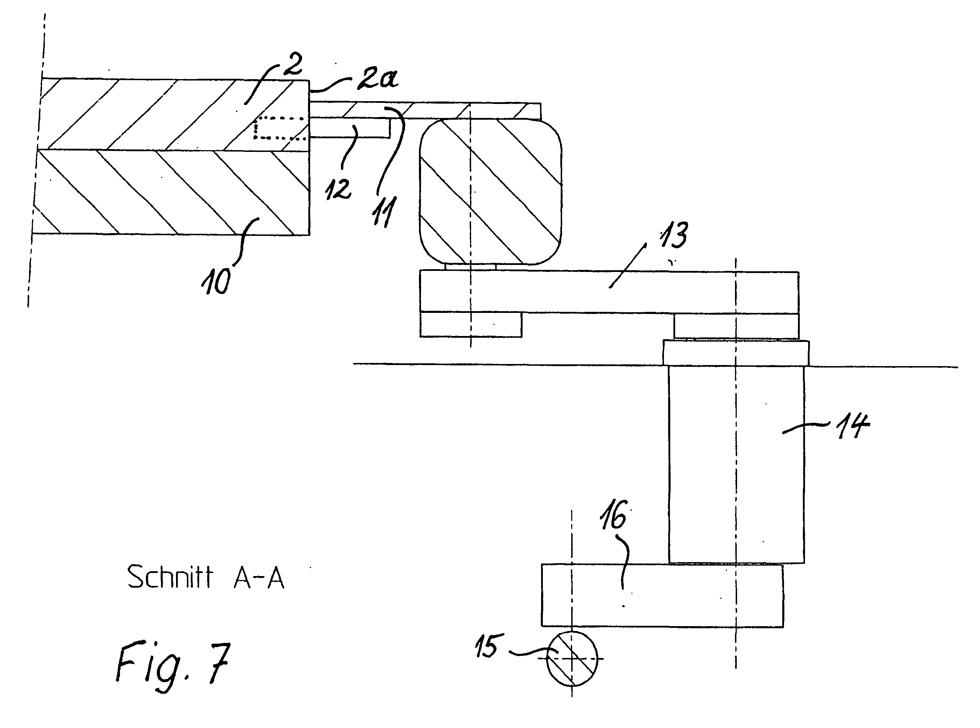

In den Fig. 6 bis 8 ist noch ein verstellbares Anschlaglineal 11 dargestellt, welches an wenigstens einem Rand der Bearbeitungs- oder Auflagefläche für das Werkstück 2 angeordnet sein kann und aus seiner besonders deutlich in Fig. 7 dargestellten Anschlagposition wegbewegt werden kann, um so den Rand 2a des Werkstücks 2, nachdem dieses zuvor daran ausgerichtet wurde, freizugeben, so dass dann auch dieser Rand 2a für eine Bearbeitung zugänglich ist.

Gemäß Fig. 6 reicht dieses Anschlaglineal 11 über die gesamte Abmessung einer Seite der Arbeitsfläche und hat an einem Ende einen rechtwinklig zu seiner Orientierung vorstehenden Zusatzanschlag 12 oder Reiter, mit dem ein rechtwinklig zu den Rand 2a verlaufender Rand des plattenförmigen Werkstücks ausgerichtet und festgelegt werden kann, so dass das Werkstück 2 die gewünschte justierte Lage auf den Saugkonsolen 3 oder der Auflageplatte 10 erhält und dann festgespannt werden kann.

Anhand der Fig. 6 bis 8 erkennt man, dass das Anschlaglineal 11 an Schwenkarmen 13 befestigt ist, die etwa in einer parallel zur Arbeitsfläche liegenden Ebene verschwenkbar sind. Sie werden dazu von einem Schwenklager 14 getragen, das seinerseits etwa vertikal ausgerichtet ist.

Die an dem Anschlaglineal 11 angreifenden beiden Schwenkarme 13 sind dabei im Ausführungsbeispiel parallel zueinander angeordnet und synchron verschwenkbar, was mit Hilfe eines Lenkers 15 bewirkt wird.

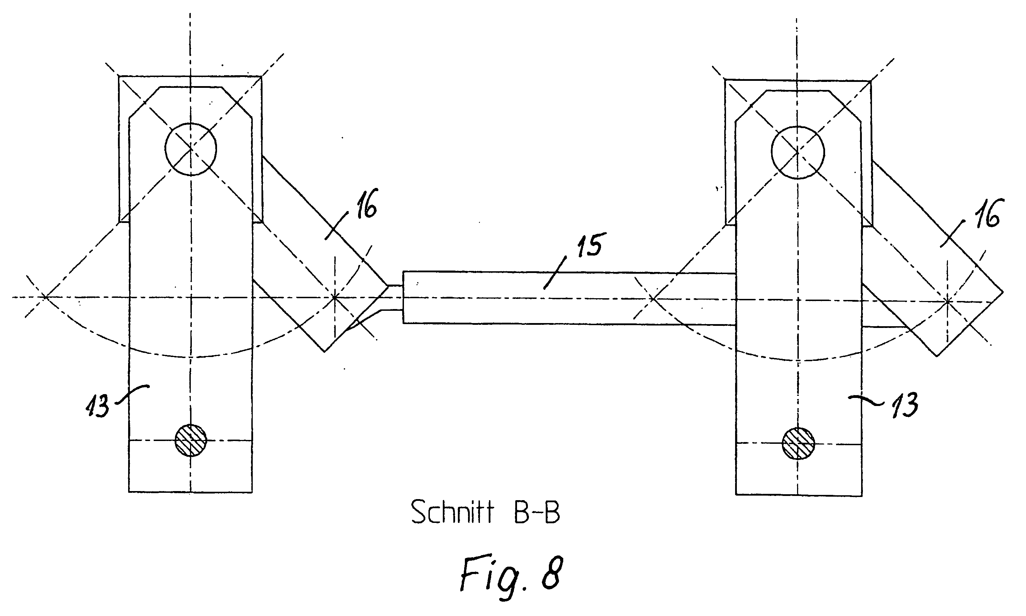

Dabei erkennt man, dass auf der durch das Schwenklager 14 verlaufenden Schwenkachse mit Abstand zu dem Anschlaglineal 11 jeweils parallel zueinander stehende gegenüber den Schwenkarmen 13 gemäß Fig. 8 um einen Winkelbetrag versetze Antriebsarme 16 vorgesehen, an denen ein Antrieb, im Ausführungsbeispiel ein Arbeitszylinder 17 und der Lenker 15 angreifen, so dass ein einziger Antrieb zum Verschwenken beider Antriebsarme 16 und damit auch beider Schwenkarme 13 genügt.

Fig. 8 ist eine Draufsicht der beiden Schwenkarme 13 ohne das von ihnen getragene, in dieser Anordnung in Gebrauchsstellung befindliche Anschlaglineal 11. Werden die Antriebsarme aus der dargestellten Gebrauchslage um einen rechten Winkel nach links verschwenkt, werden auch die Schwenkarme 13 um den selben Winkelbetrag, also in eine Lage etwa parallel zu dem Rand 2a des Werkstücks 2 verschwenkt, das heißt, die Schwenkarme 13 sind in Gebrauchsstellung rechtwinklig zu dem Anschlaglineal 11 angeordnet und die Antriebsarme 16 sind dem gegenüber um einen spitzen Winkel, im Ausführungsbeispiel um etwa 45° versetzt, so dass eine Verschwenkung der Antriebsarme 16 um 90° die Schwenkarme 13 und das Anschlaglineal 11 in eine zueinander parallele Position und gleichzeitig in Überdeckung miteinander bringt, was eine platzsparende Ruhestellung bedeutet.

Die Bearbeitungsmaschine 1 zum wenigstens teilweisen Bearbeiten, konturenabhängigen Ausscheiden oder Fräsen eines Bauteils aus einem plattenförmigen Werkstück 2, beispielsweise einer Holzplatte, mit einer als Spanneinrichtung dienenden, zum Angreifen an der Rück- oder Unterseite des Werkstücks 2 vorgesehenen Saugvorrichtung weist wenigstens einen zum Beaufschlagen der der Saugeinrichtung 3 und 4 abgewandten Seite des Werkstücks 2 dienenden Niederhalter 6 als zweite Spanneinrichtung auf, wobei der Niederhalter 6 an seinem das Werkstück 2 beaufschlagenden Berührbereich wenigstens eine oder zwei zueinander beabstandete Andrückrollen 7 hat und unter Druck relativ zu dem Werkstück 2 quer zur Achse der Andrückrolle 7 und dabei synchron mit einem zur Bearbeitung des Werkstücks 2 dienenden Werkzeug 8 verstellbar ist, welches bevorzugt zwischen zwei beabstandeten Andrückrollen 7 angeordnet sein kann.

## Patentansprüche

1. Bearbeitungsmaschine (1) zum wenigstens teilweisen Bearbeiten, konturenabhängigen Ausschneiden oder Fräsen eines Bauteils aus einem plattenförmigen Werkstück (2) mit einer als Spanneinrichtung dienenden, zum Angreifen an der Rück- oder Unterseite des Werkstücks (2) vorgesehenen Saugvorrichtung, die einzelne Sauger (4) aufweist, welche insbesondere verstellbar an einem Maschinengestell (5) der Maschine (1) angeordnet sind, und mit einer zweiten Spanneinrichtung, **dadurch gekennzeichnet, dass** die Maschine (1) als zweite Spanneinrichtung einen zum Beaufschlagen der der Saugrichtung (3,4) abgewandten Seite des Werkstücks (2) dienenden Niederhalter (6) aufweist, dass der Niederhalter (6) an seinem das Werkstück (2) beaufschlagenden Berührbereich wenigstens eine oder zwei zueinander beabstandete Andrückrollen (7) hat und unter Druck relativ zu dem Werkstück (2) quer zur Achse der Andrückrolle (7) verstellbar ist, dass die Länge der Andrückrollen (7) wenigstens nahezu der Breite des zu bearbeitenden Werkstücks (2) oder der Breite oder der Länge einer an der Maschine (1) vorgesehenen Auflagefläche für das Werkstück (2) entspricht und dass der Niederhalter (6) synchron mit einem zur Bearbeitung des Werkstücks (2) dienenden Werkzeug (8) verstellbar ist.

2. Maschine nach Anspruch 1, **dadurch gekennzeichnet, dass** die wenigstens zwei Andrückrollen (7) des Niederhalters (6) parallel und mit Abstand zueinander angeordnet und mit einer Vorschubeinrichtung (9) für das Werkzeug (8) verbunden sind.

3. Maschine nach einem der Ansprüche 1 bis 2, **dadurch gekennzeichnet, dass** das Werkzeug (8), insbesondere ein Fräser, im Zwischenraum zwischen den beiden Andrückrollen (7) angeordnet ist und die Vorschubeinrichtung (9) zum Ver-5 stellen des Werkzeugs (8) auch zum Verschieben der Andrückrollen (7) des Niederhalters (6) dient.

4. Maschine nach einem der Ansprüche 1 bis 3, **dadurch gekennzeichnet, dass** die Saugvorrichtung wenigstens eine, vorzugsweise mehrere Saugkonsolen (3) aufweist, an denen einzelne Saugköpfe (4) lösbar und entfernbar angeordnet sind und dass eine auswechselbare Auflageplatte (10) als AbStützung für ein Werkstück (2) vorgesehen ist, die auf die Saugkonsole (3) passt und darauf als Unterlage für Werkstücke (2)dient, die mit dem Niederhalter (6) einspannbar sind.

5. Maschine nach einem der Ansprüche 1 bis 4, **dadurch gekennzeichnet, dass** an wenigstens einem Rand der Bearbeitungs- oder Auflagefläche für das Werkstück (2) ein Anschlaglineal (11) angeordnet ist, welches aus seiner Anschlagposition den Rand (2a) eines zuvor daran ausgerichteten Werkstücks (2) freigebend wegbewegbar ist.

6. Maschine nach einem der Ansprüche 1 bis 5, **dadurch gekennzeichnet, dass** das Anschlaglineal (11) über die gesamte Abmessung einer Seite der Arbeitsfläche reicht und insbesondere an wenigstens einem Ende einen rechtwinklig zu seiner Orientierung vorstehenden Zusatzanschlag (12) oder Reiter trägt, der gegebenenfalls in Längsrichtung des Anschlaglineals verstellbar und festlegbar ist.

7. Maschine nach einem der Ansprüche 1 bis 6, **dadurch gekennzeichnet, dass** das Anschlaglineal (11) an Schwenkarmen (13) befestigt ist, die insbesondere etwa in einer parallel zur Arbeitsfläche liegenden oder mit der Arbeitsfläche übereinstimmenden Ebene verschwenkbar sind.

8. Maschine nach einem der Ansprüche 1 bis 7, **dadurch gekennzeichnet, dass** die an dem Anschlaglineal (11) angreifenden Schwenkarme (13) parallel zueinander angeordnet und synchron verschwenkbar sind und dass auf ihrer Schwenkachse mit Abstand zu dem Anschlaglineal (11) jeweils parallel zueinanderstehende, gegenüber den Schwenkarmen (13) um einen Winkelbetrag versetzte Antriebsarme (16) vorgesehen sind, an denen ein Drehantrieb, gegebenenfalls ein Lenker (15) und ein Antrieb, angreift.

9. Maschine nach einem der Ansprüche 1 bis 8, **dadurch gekennzeichnet, dass** die Schwenkarme (13) in Gebrauchsstellung des Anschlaglineals (11) rechtwinklig zu diesem und die Antriebsarme (16) dem gegenüber um einen spitzen Winkel, zum Beispiel um etwa 45° versetzt angeordnet sind, so dass eine Verschwenkung der Antriebsarme (16) um 90° die Schwenkarme (13) und das Anschlaglineal (11) in eine parallele Lage zueinander und vorzugsweise in Überdeckung miteinander bringen.

## Claims

1. Processing machine (1) for at least partial machining, contour-dependent cutting or milling of a component from a workpiece (2) in sheet form, having a suction device serving as the clamping means, intended for acting on the reverse or underside of the workpiece (2), said suction device having individual suckers (4) which are disposed, in particular, adjustably on a machine frame (5) of the machine (1), and having second clamping means, **characterised in that** the machine (1) comprises as the second clamping means a hold-down device (6) serving to act on the side of the workpiece (2) remote from the direction of suction (3, 4), **in that** the hold-down device (6) has at least one or two spaced-apart pressing rollers (7) on its contact area acting on the work-piece (2), and is movable transversely with respect to the axis of the pressing roller (7) under pressure relative to the workpiece (2) , **in that** the length of the pressing rollers (7) corresponds at least substantially to the width of the workpiece (2) which is to be machined or to the width or length of an abutment surface for the workpiece (2) provided on the machine (1), and **in that** the hold-down device (6) is movable synchronously with a tool (8) serving to machine the workpiece (2).

2. Machine according to claim 1, **characterised in that** the minimum of two pressing rollers (7) of the hold-down device (6) are arranged parallel and at a spacing from one another and are connected to a feed device (9) for the workpiece (8).

3. Machine according to one of claims 1 to 2, **characterised in that** the tool (8), particularly a milling tool, is arranged in the gap between the two pressing rollers (7) and the feed device (9) for moving the tool (8) also serves to move the pressing rollers (7) of the hold-down device (6).

4. Machine according to one of claims 1 to 3, **characterised in that** the suction device has at least one and preferably several suction brackets (3) on which individual suction heads (4) are releasably and removably mounted and **in that** a replaceable supporting plate (10) is provided as the support for a workpiece (2), said supporting plate (10) fitting on the suction bracket (3) and serving thereon as a support for workpieces (2) which can be clamped in place using the hold-down device (6).

5. Machine according to one of claims 1 to 4, **characterised in that** a stop-ruler (11) is provided along at least one edge of the machining or abutment surface for the workpiece (2), said ruler (11) being movable away from its position of abutment, thereby freeing the edge (2a) of a workpiece (2) previously aligned thereon.

6. Machine according to one of claims 1 to 5, **characterised in that** the stop ruler (11) extends over the full extent of one side of the working area and particularly at least at one end carries an additional stop (12) or cursor projecting at right angles to its orientation, said stop (12) or cursor optionally being movable and lockable in the longitudinal direction of the stop ruler.

7. Machine according to one of claims 1 to 6, **characterised in that** the stop ruler (11) is secured to pivot arms (13) which are pivotable in particular substantially in a plane disposed parallel to the working area or coinciding with the working area.

8. Machine according to one of claims 1 to 7, **characterised in that** the pivot arms (13) acting on the stop ruler (11) are arranged parallel to one another and are synchronously pivotable and **in that** on their pivot axis at a spacing from the stop ruler (11) are provided drive arms (16) which are parallel to one another and offset relative to the pivot arms (13) by an angular amount, on which a rotary drive, optionally a guide (15) and a drive, engage.

9. Machine according to one of claims 1 to 8, **characterised in that**, in the position of use of the stop ruler (11), the pivot arms (13) are arranged at right angles to the latter and the drive arms (16) are offset relative thereto by an acute angle, e.g. about 45°, so that pivoting the drive arms (16) through 90° brings the pivot arms (13) and the stop ruler (11) into a parallel position to one another and preferably into a position in which they are superimposed on one another.

## Revendications

1. Machine-outil (1) pour l'usinage au moins partiel, par coupe ou fraisage, le long d'un contour déterminé, d'une portion d'une pièce en forme de plateau (2), comprenant un dispositif d'aspiration, servant de système de serrage prévu pour saisir le côté postérieur ou le côté inférieur de la pièce (2), du type comportant des aspirateurs individuels (4), qui sont disposés, plus particulièrement réglables sur un bâti de machine (5) de la machine (1), ainsi qu'un second système de serrage, **caractérisée en ce que** la machine comprend, en tant que second système de serrage, un support inférieur (6) servant à recevoir le côté de la pièce (2) orienté dans la direction d'aspiration (3, 4) de la pièce (2), **en ce que** le support inférieur (6) présente, dans sa région de réception de la pièce (2), au moins un ou deux galets de compression espacés l'un de l'autre (7), et qu'il peut être réglé sous pression par rapport à la pièce (2) transversalement à l'axe des galets de compression (7), **en ce que** la longueur des galets de compression (7) correspond au moins à peu près à la largeur de la pièce à usiner (2), ou à la largeur ou à la longueur d'une surface d'appui de la pièce (2) prévue sur la machine (1), et **en ce que** le support inférieur (6) est réglable en synchronisme avec un outil (8) servant à l'usinage de la pièce (2).

2. Machine selon la revendication 1, **caractérisée en ce que** les deux galets de compression (7) du support inférieur (6) sont disposés parallèlement et espacés l'un de l'autre et sont réunis par un système de coulissement (9) de l'outil (8).

3. Machine selon l'une ou l'autre des revendications 1 et 2, **caractérisée en ce que** l'outil (8) et plus particulièrement la fraiseuse, est disposé dans l'espace existant entre les deux galets de pression (7), et le système de coulissement (9) sert à délacer l'outil (8) aussi bien qu'à faire coulisser les galets de pression (7) du support inférieur (6).

4. Machine selon l'une quelconque des revendications 1 à 3, **caractérisée en ce que** le dispositif d'aspiration présente une, et de préférence plusieurs, consoles d'aspiration individuelles (3), détachables et amovibles et **en ce qu'**un plateau d'appui (10) interchangeable est prévu en tant que moyen de maintien pour une pièce (2), qui s'adapte à la console d'aspiration (3), et qui sert au surplus d'appui à l'outil (2), pouvant être serrés en même temps que le support inférieur (6).

5. Machine selon l'une quelconque des revendications 1 à 4, **caractérisée en ce que**, sur au moins un bord de la surface d'usinage ou de la surface d'appui pour la pièce (2) est disposée une réglette de butée (11), qui, à l'extérieur de sa position de butée, constitue le bord (2a) d'une pièce alignée pouvant librement s'échapper.

6. Machine selon l'une quelconque des revendications 1 à 5, **caractérisée en ce que** la réglette de butée (11), par sa dimension totale, atteint un côté de la surface de travail, et plus particulièrement, porte, à au moins une extrémité, une butée additionnelle en relief (12), ou un cavalier perpendiculaire à son orientation qui, éventuellement peut être réglé et fixé dans la direction longitudinale de la réglette de butée.

7. Machine selon l'une quelconque des revendications 1 à 6, **caractérisée en ce que** la réglette de butée (11) est fixée à des bras pivotants (13), qui, plus particulièrement peuvent pivoter dans un plan à peu près parallèle au plan de travail ou confondu avec ce plan.

8. Machine selon l'une quelconque des revendications 1 à 7, **caractérisée en ce que** les bras pivotants (13) accrochés à la réglette de butée (11) sont disposés parallèlement les uns aux autres, et peuvent pivoter en synchronisme, et **en ce que** sont prévus des bras d'entraînement (16), décalés angulairement par rapport aux bras pivotants, parallèles les uns aux autres et espacés de la réglette de butée (11) sur leur axe de pivotement, et auxquels est associé un entraînement en rotation ou éventuellement une bielle (15) et un entraînement.

9. Machine selon l'une quelconque des revendications 1 à 8 **caractérisée en ce que** les bras pivotants (13), en position d'utilisation de la réglette de butée (11), sont perpendiculaires à celle-ci et les bras d'entraînement (16) sont décalés d'un angle aigu, par exemple d'environ 45°, de sorte qu'un pivotement de l'arbre d'entraînement (16) de 90° amène le bras pivotant (13) et la réglette de butée (11) à être parallèles l'un à l'autre, et de préférence, superposés l'un à l'autre.
